# EUROPEAN PATENT APPLICATION

(11) **EP 4 249 989 A1**
(43) Date of publication of application: **27.09.2023**
(21) Application number: 21914106.6
(22) Date of filing: 23.12.2021
(51) Int. Cl.: G02B 27/01, G02B 17/08

(54) **OPTICAL MODULE AND ELECTRONIC DEVICE**

(30) Priority: 29.12.2020 CN 202011613157
(71) Applicant: Huawei Technologies Co., Ltd., Shenzhen, Guangdong 518129 (CN)
(72) Inventor: JIN, Yunfeng, Shenzhen, Guangdong 518129 (CN); ZHENG, Xiaowen, Shenzhen, Guangdong 518129 (CN)
(74) Representative: Gill Jennings & Every LLP
(86) International application number: PCT/CN2021/140698
(87) International publication number: WO 2022/143369

(57) **Abstract**

An optical module (100) and an electronic device (1000) including the optical module (100) are provided. The optical module (100) includes at least one laminating lens (11, 12), and object side surfaces and image side surfaces of the laminating lenses (11, 12) are curved surfaces. One or more of a linear polarizer (31), a first quarter-phase retarder (32), a partially transmissive and partially reflective film (33), a second quarter-phase retarder (34), and a reflective polarizer (35) are laminated to the object side surfaces or the image side surfaces of the laminating lenses (11, 12). Therefore, there is no need to add a flat lens specially used for diaphragm lamination. This can avoid increasing a quantity of 1 enses, and can reduce a total track length and a weight of the optical module (100). In addition, the object side surfaces and the image side surfaces of the laminating lenses (11, 12) are curved surfaces, and the object side surfaces or the image side surfaces of the laminating lenses (11, 12) are not designed as planes to facilitate diaphragm lamination. Therefore, this can achieve an effect of reducing an optical aberration by adding curved surfaces, and ensure a required optical effect.

## Description

This application claims priority to Chinese Patent Application No. 202011613157.3, filed with the China National Intellectual Property Administration on December 29, 2020, and entitled "OPTICAL MODULE AND ELECTRONIC DEVICE", which is incorporated herein by reference in its entirety.

### TECHNICAL FIELD

Embodiments of this application relate to the field of optical technologies, and specifically, to an optical module and an electronic device.

### BACKGROUND

Some electronic devices can magnify an image picture on a display through an optical system and refract the image picture to human eyes, so that the human eyes can see a magnified virtual image, to enhance immersive experience for a user during use. An optical system of an existing electronic device usually includes one or more lenses, and an image picture emitted by a display is refracted into human eyes through the lens. To implement better immersive experience, a larger picture that can be observed by human eyes is better. Therefore, to increase a size of a picture that can be observed by human eyes, a distance between the display and the human eyes usually needs to be large, so that the electronic device needs to have a large thickness.

### SUMMARY

This application provides an optical lens and an electronic device including the optical lens. A user can observe a large display picture by using the electronic device, and the electronic device can have a small thickness and light mass, so that a volume of the electronic device is reduced, portability of the electronic device is improved, and carrying or wearing experience of the electronic device is improved.

According to a first aspect, this application provides an optical module, where the optical module includes a plurality of lenses sequentially arranged from an object side to an image side, where each lens includes an object side surface and an image side surface that are disposed opposite to each other, the object side surface faces an object side, and the image side surface faces an image side; the plurality of lenses include at least one laminating lens, and both an object side surface and an image side surface of the laminating lens are curved surfaces; the optical module further includes a linear polarizer, a first quarter-phase retarder, a partially transmissive and partially reflective film, a second quarter-phase retarder, and a reflective polarizer; and the linear polarizer, the first quarter-phase retarder, the partially transmissive and partially reflective film, the second quarter-phase retarder, and the reflective polarizer are sequentially arranged from the object side to the image side, and one or more of the linear polarizer, the first quarter-phase retarder, the partially transmissive and partially reflective film, the second quarter-phase retarder, and the reflective polarizer are laminated to the object side surface or the image side surface of the laminating lens.

In an implementation of this application, the optical module includes the linear polarizer, the first quarter-phase retarder, the partially transmissive and partially reflective film, the second quarter-phase retarder, and the reflective polarizer that are sequentially arranged from the object side to the image side. Light transmitted in the optical module is reflected once on both a surface of the partially transmissive and partially reflective film and a surface of the reflective polarizer. In this way, light transmitted in the optical module is folded twice between the partially transmissive and partially reflective film and the reflective polarizer. This can reduce a total track length of the optical module while ensuring that an optical effect of the optical module remains unchanged, thereby implementing thinness and lightness of the electronic device, and facilitating wearing and carrying of the electronic device.

In addition, in this implementation of this application, one or more diaphragms of the linear polarizer, the first quarter-phase retarder, the partially transmissive and partially reflective film, the second quarter-phase retarder, and the reflective polarizer may be laminated to the object side surface or the laminating lens, and both the object side surface and the image side surface of the laminating lens are curved surfaces. Therefore, there is no need to additionally add a flat lens specially used for diaphragm lamination, or to design a surface of a lens as a plane for ease of lamination. In this way, a quantity of lenses and a thickness of the lenses of the optical module can be reduced while the optical module can implement a good optical effect, thereby reducing an on-axis thickness of the optical module, reducing a weight of the optical module, reducing a thickness of the electronic device, and reducing a weight of the electronic device.

In some implementations, the reflective polarizer and the second quarter-phase retarder bend towards the image side, a surface vector height of the reflective polarizer at a location with an effective aperture of h is S 1, a surface vector height of the second quarter-phase retarder at a location with an effective aperture of h is S2, and the reflective polarizer and the second quarter-phase retarder meet a relationship: S2-S1≤h/5. This ensures that a radius of curvature of the reflective polarizer is smaller than that of the second quarter-phase retarder, or that a curvature radius of the reflective polarizer is only slightly larger than that of the second quarter-phase retarder, thereby avoiding light leakage. In addition, when the second quarter-phase retarder and the second quarter-phase retarder are respectively laminated to an object side surface and an image side surface that are adjacent and that are of adjacent lenses, because the curvature radius of the reflective polarizer is smaller than that of the second quarter-phase retarder, or the curvature radius of the reflective polarizer is slightly larger than that of the second quarter-phase retarder, it can be ensured that the two lenses can be disposed as close as possible, and a gap on an axis of the two lenses can be reduced as much as possible, therefore, the total track length of the optical module is reduced.

In some implementations, the object side surface and the image side surface of the laminating lens are spherical surfaces, aspheric surfaces, or free curved surfaces with one inflection. This can ensure that when a diaphragm is laminated to the laminating lens, there is a good fit between the laminating lens and the diaphragm in all positions, and there is no problem such as an air bubble between the laminating lens and the diaphragm.

In some implementations, there are at least two laminating lenses, the at least two laminating lenses include a first laminating lens and a second laminating lens, the first laminating lens is a laminating lens that is farthest from the object side, and the second laminating lens is a laminating lens that is closest to the object side. This can ensure that a diaphragm can have sufficient lamination location and that the optical module can have good optical effect.

In some implementations, the reflective polarizer is laminated to an image side surface of the first laminating lens, and the partially transmissive and partially reflective film is laminated to an object side surface of the second laminating lens.

In this implementation of this application, because light is folded between the partially transmissive and partially reflective film and the reflective polarizer, the optical module in this application can implement a required optical effect, and the total track length of the optical module can be small. Therefore, in this implementation of this application, the reflective polarizer is laminated to the image side surface of the first laminating lens, and the partially transmissive and partially reflective film is laminated to the object side surface of the second laminating lens, so that a distance between the reflective polarizer and the partially transmissive and partially reflective film can be increased as much as possible. This increases a transmission path of light between the reflective polarizer and the partially transmissive and partially reflective film as much as possible, and further reduces the total track length of the optical module while enabling the optical module to implement the same optical effect.

In some implementations, the second quarter-phase retarder is laminated to an object side surface of the first laminating lens or an image side surface of the second laminating lens.

In some implementations, the reflective polarizer is laminated to the object side surface of the first laminating lens, the partially transmissive and partially reflective film is laminated to the object side surface of the second laminating lens, and the second quarter-phase retarder is laminated to the image side surface of the second laminating lens.

In some implementations, the plurality of lenses further include at least one optical adjustment lens, an object side surface or an image side surface of the optical adjustment lens is a free curved surface with a plurality of inflections, and the optical adjustment lens is configured to adjust an optical effect of the optical module. In this implementation, adding the optical adjustment lens to the optical module can further adjust the optical effect of the optical module, so that the electronic device can implement a better imaging effect.

In some implementations, the reflective polarizer and the second quarter-phase retarder are laminated to different laminating lenses. This can avoid a problem that the reflective polarizer or the second quarter-phase retarder laminated on a side of a lens is scrapped when the reflective polarizer or the second quarter-phase retarder is poorly laminated on the other side of the lens, thus reducing production costs.

In some implementations, a total track length of the optical module is less than or equal to 30 mm, and mass of the plurality of lenses of the optical module is less than or equal to 25 g.

In some implementations, the optical module further includes a display, and the display is located on object sides of the plurality of lenses. Light emitted by the display can be transmitted to human eyes by using the plurality of lenses and diaphragms of the optical module.

According to a second aspect, this application further provides an electronic device. The electronic device includes a holder and the foregoing optical module, and the optical module is fastened to the holder. The optical module in this application can reduce a total track length of the optical module while ensuring that an optical effect of the optical module remains unchanged, thereby implementing thinness and lightness of the electronic device including the optical module, and facilitating wearing and carrying of the electronic device.

### BRIEF DESCRIPTION OF DRAWINGS

FIG. 1 is a schematic diagram of a structure of an electronic device according to an implementation of this application;
FIG. 2 is a schematic diagram of a cross section of the electronic device shown in FIG. 1 after being cut off along I-I;
FIG. 3 is a block diagram of working modules of an electronic device according to this application;
FIG. 4 is a schematic diagram of a structure of an optical module according to a first implementation of this application;
FIG. 5 is a schematic diagram of a cross section of a lens in some other implementations of this application;
FIG. 6 is a schematic diagram of optical paths when light is transmitted through each diaphragm in the optical module according to an implementation of this application;
FIG. 7 is a schematic diagram of a structure of an optical module according to a second implementation of this application;
FIG. 8 is a schematic diagram of a structure of an optical module according to a third implementation of this application;
FIG. 9 is a schematic diagram of a structure of an optical module according to a fourth implementation of this application;
FIG. 10 is a schematic diagram of a structure of an optical module according to a fifth implementation of this application;
FIG. 11 is a representation diagram of optical performance of the optical module according to the first implementation;
FIG. 12 is a representation diagram of optical performance of the optical module according to the second implementation;
FIG. 13 is a representation diagram of optical performance of the optical module according to the third implementation;
FIG. 14 is a representation diagram of optical performance of the optical module according to the fourth implementation; and
FIG. 15 is a representation diagram of optical performance of the optical module according to the fifth implementation.

### DESCRIPTION OF EMBODIMENTS

The following describes the technical solutions in implementations of this application with reference to accompanying drawings.

For ease of understanding, the following first explains and describes technical terms in this application.

A total track length (total track length, TTL) of an optical module is a total length from an imaging surface of the optical module to a light-emitting surface of a display.

An optical axis is a light ray that passes vertically through an ideal lens center. When light rays parallel to the optical axis pass through a convex lens, in an ideal convex lens, all the light rays converge at one point behind the lens. This point at which all the light rays converge is a focus.

An object side is a side on which a photographed object is located with a lens group as a boundary. In this application, a photographed object is a display, and a side on which the display is located is an object side.

An image side is a side on which an image of a photographed object is located with a lens group as a boundary. In this application, the side on which an image of a photographed object is located is an observation side, that is, an observation side on which a human-eye location is located.

An object side surface is a surface of a lens facing an object side.

An image side surface is a surface of a lens facing an image side.

This application provides an electronic device, and a user can observe a virtual image by using the electronic device. In some implementations of this application, the electronic device may be augmented reality (Augmented Reality, AR for short) glasses, virtual reality (Virtual Reality, VR for short) glasses, or another image display device. A form of the electronic device may be a form of glasses, a form of a helmet, or the like. In this application, an example in which the electronic device is virtual reality glasses in a form of glasses is used for description.

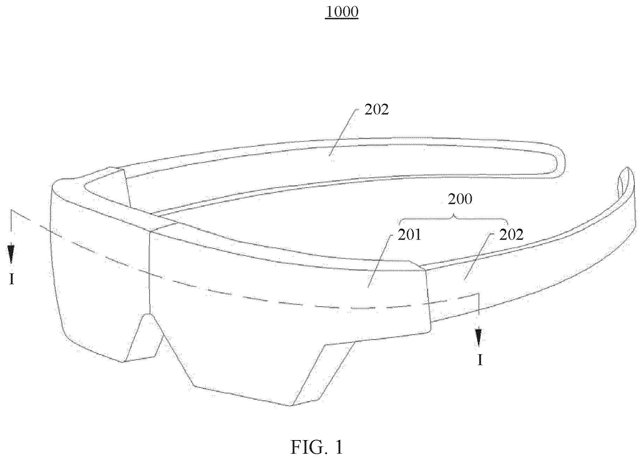

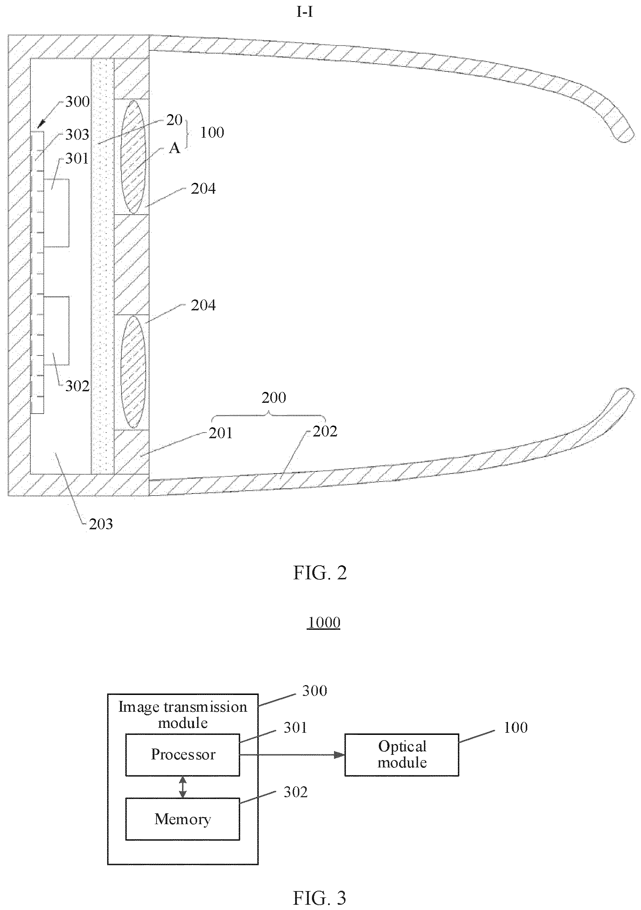

Refer to FIG. 1 and FIG. 2. FIG. 1 is a schematic diagram of a structure of an electronic device 1000 according to an implementation of this application. FIG. 2 is a schematic diagram of a cross section of the electronic device 1000 shown in FIG. 1 after being cut off along I-I. In this implementation, the electronic device 1000 is virtual reality glasses in an eye form.

In this implementation of this application, the electronic device 1000 includes an optical module 100, a holder 200, and an image transmission module 300. Both the image transmission module 300 and the optical module 100 are accommodated in the holder 200. The image transmission module 300 is communicatively connected to the optical module 100, to transmit image data to the optical module 100. The optical module 100 can display the received image data, and transmit a displayed picture to human eyes, so that the human eyes can observe the picture played by the electronic device 1000. A communication connection between the image transmission module 300 and the optical module 100 may include data transmission in an electrical connection manner such as a cabling connection, or may be implemented in another manner that can implement data transmission, such as an optical cable connection or wireless transmission. A communication connection manner between the image transmission module 300 and the optical module 100 is not specifically limited in this application.

In this implementation, the holder 200 includes a holder main body 201 and two temples 202 connected to two ends of the holder main body 201. The holder main body 201 includes an accommodating cavity 203, and the optical module 100 and the image transmission module 300 are accommodated in the accommodating cavity 203 of the holder main body 201. When using the electronic device 1000 in this application, a user may separately stand the two temples 202 on a left/right ear, to wear the electronic device 1000 in this application. In this implementation, two light emission holes 204 disposed at intervals are disposed on a cavity wall of the accommodating cavity 203. The two light emission holes 204 are configured to enable light emitted by the optical module 100 to pass through from the accommodating cavity 203. When the user wears the electronic device 1000 in this application, the two light emission holes 204 on the cavity wall are respectively opposite to the two eyes of the user, so that a picture emitted through the two light emission holes 204 can be transmitted to the eyes of the user, and the user can observe the picture played by the electronic device 1000.

It may be understood that in some other implementations of this application, the electronic device 1000 may alternatively be in another form, and structures of the holders 200 of the electronic device 1000 in different forms are different. This is not specifically limited in this application. For example, in some implementations, the electronic device 1000 is virtual reality glasses in a helmet form, and the holder 200 is in a helmet form and can be worn on the head of the user.

Refer to FIG. 2 and FIG. 3 together. FIG. 3 is a block diagram of working modules of an electronic device 1000 according to this application. Both an optical module 100 and an image transmission module 300 are operating modules of the electronic device 1000. The image transmission module 300 is configured to process and transmit image information, and the optical module 100 is configured to display the image information. Specifically, in some implementations of this application, the image transmission module 300 includes a processor 301. The processor 301 can process image information obtained from the outside, and then transmit the processed image information to the optical module 100 for display.

In some other implementations of this application, the image transmission module 300 may further include a memory 302, and image information processed by the processor 301 can be transmitted to the memory 302 for storage. When an image needs to be displayed, the processor 301 obtains image information from the memory 302 and transmits the image information to the optical module 100 for display.

In some other implementations of this application, the memory 302 may store image data. When an image needs to be displayed, the processor 301 obtains image information from the memory 302, processes the image information, and then transmits the processed image information to the optical module 100 for displaying.

In this implementation of this application, the processor 301 may be an image processing chip or a digital signal processing (digital signal processing, DSP) chip. This is not specifically limited in this application.

In some implementations of this application, the electronic device 1000 further includes a circuit board 303. Both the processor 301 and the memory 302 may be disposed on the circuit board 303, and a communication connection between the processor 301 and the memory 302 is implemented by using a cable on the circuit board 303.

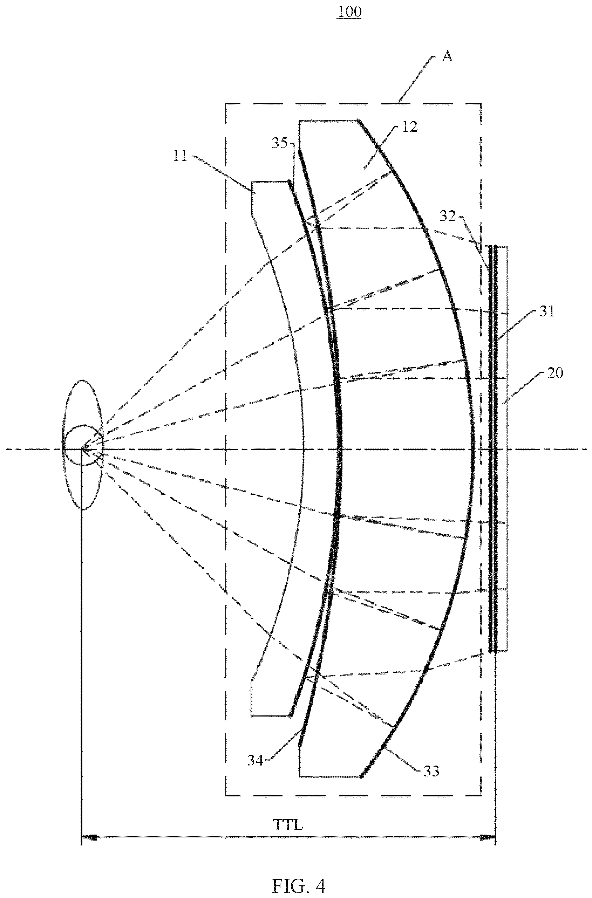

Refer to FIG. 4. FIG. 4 is a schematic diagram of a structure of an optical module 100 according to a first implementation of this application. In this implementation of this application, the optical module 100 includes a lens group A, a display 20, and different diaphragms. The lens group A includes a plurality of lenses sequentially arranged from an object side to an image side, and each lens includes an object side surface and an image side surface that are disposed opposite to each other. The object side surface faces the object side, and the image side surface faces the image side. The display 20 is located on an object side of the lens group A, the object side surface of the lens faces the display 20, and the image side surface of the lens is away from the display 20. An image displayed on the display 20 is imaged on an image side of the lens group A after being imaged by the lens group A. When a user wears the electronic device 1000 in this implementation of this application, the eyes of the user are located on the image side of the lens group A, and a display picture of the display 20 is imaged at a retina location of a human eye after being refracted by the lens of the lens group A, so that the user can observe the display picture displayed on the display 20. It may be understood that, in another implementation of this application, the optical module 100 may include only the lens group A and the diaphragms.

Refer to FIG. 2 again. In this application, the electronic device 1000 includes two sets of optical modules 100. Each set of optical modules 100 has a same structure, and each set of optical modules 100 includes a lens group A, a display 20, and different diaphragms. Each of the lens groups A of the two sets of optical modules 100 is disposed in one light emission hole 304. Alternatively, each of the lens groups A of the two sets of optical modules 100 is opposite to one light emission hole 304, so that light emitted from the lens group A is incident to a human eye from the corresponding light emission hole 304. In this application, when the user wears the electronic device 1000, the left eye and the right eye of the user each are opposite to one light emission hole 304, to receive light emitted from the light emission hole 304. In other words, light transmitted by the two sets of optical modules 100 of the electronic device 1000 in this application can be respectively received by the left eye and the right eye of the user, so that the user can view, by using both eyes, a picture displayed on the display 20. In an implementation of this application, the display 20 of the two sets of optical modules 100 is of an integrated structure. It may be understood that, in another implementation of this application, each of the two sets of optical modules 100 may have an independent display 20.

In this application, one of the two sets of optical modules 100 is used as an example to specifically describe a structure of the optical module 100.

In an implementation of this application, the lens group A includes a plurality of lenses. The plurality of lenses include at least one laminating lens. In this application, the laminating lens is a lens of which a diaphragm can be laminated to an object side surface and/or an image side surface of the laminating lens with high quality. This can ensure that when a diaphragm is laminated to the laminating lens, there is a good fit between the laminating lens and the diaphragm in all positions, and there is no problem such as an air bubble between the laminating lens and the diaphragm. In addition, in this application, both the object side surface and the image side surface of the laminating lens are curved surfaces. Compared with a plane, the curved surface can better change a light transmission direction, and can reduce an optical aberration better. Therefore, the curved surface can achieve a better optical effect compared with the plane. At least a part of the diaphragm in this application is laminated to the object side surface or the image side surface of the laminating lens. Compared with a solution in which an object side surface or an image side surface of a lens is designed as a plane for diaphragm lamination, the optical module 100 in this application can implement a better optical effect by using fewer lenses, thereby reducing a total track length (total track length, TTL) of the optical module 100, reducing a thickness of the electronic device 1000, and reducing a volume and weight of the electronic device 1000. In addition, because at least a part of the diaphragm in this application may be laminated to the object side surface or the image side surface of the laminating lens, compared with adding a flat lens specially used for diaphragm lamination, the optical module 100 in this application can reduce a quantity of lenses in the optical module 100 as much as possible while ensuring that a light refraction effect of the lens of the optical module 100 is not affected, thereby reducing the total track length of the optical module 100, reducing the thickness of the electronic device 1000, and reducing the volume and weight of the electronic device 1000. In some implementations of this application, the total track length of the optical module 100 is less than or equal to 30 mm, and mass of the lenses of the optical module 100 is less than or equal to 25 g.

In some implementations of this application, the object side surface and/or the image side surface of the laminating lens are/is a spherical surface, an aspheric surface, or a free curved surface with one inflection, so that the diaphragm can be laminated to the object side surface and/or the image side surface of the laminating lens with high quality. The free curved surface with one inflection indicates that the free curved surface has only one vertex. For example, a free curved surface with one inflection may be a concave surface or a convex surface, or may be a free curved surface of which an edge is a plane and a middle area is a concave surface or a convex surface. The free curved surface with one inflection can facilitate lamination of the diaphragm, ensure lamination quality of the diaphragm when a diaphragm is laminated to a lens, and avoid a lamination quality problem such as an air bubble occurs when the diaphragm is laminated to the lens.

For example, in the implementation shown in FIG. 4, the lens group A includes two lenses: a first lens 11 and a second lens 12, and the first lens 11 is far away from the display 20 relative to the second lens 12. An object side surface of the first lens 11 is a convex surface, and an image side surface is a free curved surface with one inflection. An object side surface of the second lens 12 is a convex surface, and an image side surface of the second lens 12 is a free curved surface with one inflection. Therefore, in the implementation shown in FIG. 4, both the first lens 11 and the second lens 12 are laminating lenses, and a diaphragm may be laminated to the object side surface or the image side surface of the first lens 11, or laminated to the object side surface or the image side surface of the second lens 12. Therefore, there is no need to add a flat lens for diaphragm lamination, so that a quantity of lenses in the optical module is reduced, and a total track length and weight of an optical module are reduced. In addition, in this implementation, the object side surface and the image side surface of the first lens 11 and the object side surface and the image side surface of the second lens 12 are all curved surfaces, which can implement a good optical effect, and function well in reducing an aberration. Compared with that an object side surface or an image side surface of a lens is designed as a plane used for diaphragm lamination, the optical module 100 in this implementation can implement a better optical effect. Alternatively, when a same optical effect is implemented, in this implementation, a lens thickness of the optical module 100 can be smaller, so that the total track length and the weight of the optical module are reduced. It may be understood that, in another implementation of this application, the lens group A may include more lenses. For example, the lens group A may include three, four, five, or more lenses.

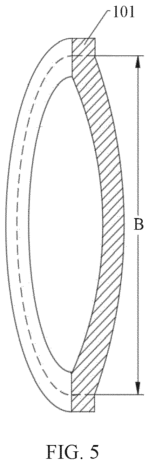

It should be noted that, in this application, that the object side surface and/or the image side surface of the laminating lens are/is a spherical surface, an aspheric surface, or a free curved surface with one inflection means that an effective light transmission area B of the object side surface and/or the image side surface of the laminating lens is a spherical surface, an aspheric surface, or a free curved surface with one inflection. For example, refer to FIG. 5. FIG. 5 is a schematic diagram of a cross section of a lens in some other implementations of this application. In this implementation, an edge of a laminating lens may further include a flange 101 that is mainly used for supporting and fixing. An area surrounded by the flange 101 is an actual effective transparent area B of the laminating lens. An object side surface or an image side surface of the effective transparent area B is a spherical surface, an aspheric surface, or a free curved surface with one inflection. A diaphragm can be laminated to the object side surface or the image side surface of the effective transparent area B. That is, the lens in the implementation shown in FIG. 5 is also a laminating lens.

Refer to FIG. 4 again. In an implementation of this application, there are a plurality of diaphragms of the optical module 100, and the plurality of diaphragms include a linear polarizer 31, a first quarter-phase retarder 32, a partially transmissive and partially reflective film 33, a second quarter-phase retarder 34, and a reflective polarizer 35. In this implementation, the linear polarizer 31, the first quarter-phase retarder 32, the partially transmissive and partially reflective film 33, the second quarter-phase retarder 34, and the reflective polarizer 35 are sequentially arranged from the object side to the image side. That is, the linear polarizer 31, the first quarter-phase retarder 32, the partially transmissive and partially reflective film 33, the second quarter-phase retarder 34, and the reflective polarizer 35 are sequentially arranged from a side close to the display 20 to a side away from the display 20. In this implementation, one or more of the linear polarizer 31, the first quarter-phase retarder 32, the partially transmissive and partially reflective film 33, the second quarter-phase retarder 34, and the reflective polarizer 35 may be laminated to an object side surface or an image side surface of a laminating lens. Therefore, there is no need to additionally add a flat lens specially used for diaphragm lamination, or to design a surface of a lens as a plane for ease of lamination. In this way, a quantity of lenses and a thickness of the lenses of the optical module 100 can be reduced while the optical module 100 can implement a good optical effect, thereby reducing an on-axis thickness of the optical module 100, reducing a weight of the optical module 100, reducing a thickness of the electronic device 1000, and reducing a weight of the electronic device 1000. For example, in some implementations, the linear polarizer 31, the first quarter-phase retarder 32, the partially transmissive and partially reflective film 33, the second quarter-phase retarder 34, and the reflective polarizer 35 are all laminated to the object side surface or the image side surface of the laminating lens. Alternatively, in some other implementations, only the partially transmissive and partially reflective film 33, the second quarter-phase retarder 34, and the reflective polarizer 35 are laminated to the object side surface or the image side surface of the laminating lens. Alternatively, in some implementations, only the reflective polarizer 35 is laminated to the object side surface or the image side surface of the laminating lens.

It should be noted that, in this application, at least some diaphragms of the linear polarizer 31, the first quarter-phase retarder 32, the partially transmissive and partially reflective film 33, the second quarter-phase retarder 34, and the reflective polarizer 35 are laminated to the object side surface or the image side surface of the laminating lens. In other words, in some implementations of this application, the linear polarizer 31, the first quarter-phase retarder 32, the partially transmissive and partially reflective film 33, the second quarter-phase retarder 34, and the reflective polarizer 35 may all be laminated to the object side surface or the image side surface of the laminating lens. In some other implementations of this application, some diaphragms of the linear polarizer 31, the first quarter-phase retarder 32, the partially transmissive and partially reflective film 33, the second quarter-phase retarder 34, and the reflective polarizer 35 may be laminated to the object side surface or the image side surface of the laminating lens, and remaining diaphragms may be laminated to a surface of the display 20, a surface of a flat lens, or a surface of another lens.

It can be understood that, in another implementation of this application, the optical module 100 may further include another type of diaphragm, and the diaphragm is laminated to the object side surface or the image side surface of the laminating lens, to further improve optical performance of the optical module 100. For example, in some implementations, the optical module 100 may further include a light filtering film, a color filtering film, an antireflective film, a light converging film, and the like.

In this implementation of this application, the linear polarizer 31 can convert natural light into linear polarized light; the first quarter-phase retarder 32 and the second quarter-phase retarder 34 can be configured to implement conversion between linearly polarized light and elliptically polarized light; and the partially transmissive and partially reflective film 33 can be configured to transmit some light and reflect some light. It should be noted that, in this implementation of this application, transmittance and reflectance of light irradiated on a surface of the partially transmissive and partially reflective film 33 may be adjusted based on a requirement, and the transmittance and the reflectance of the light irradiated on the surface of the partially transmissive and partially reflective film 33 are not limited in this application. For example, in some implementations of this application, the partially transmissive and partially reflective film 33 may be a semi-reflective partial-transmissive film, where 50% of light in light irradiated on the surface of the partially transmissive and partially reflective film 33 is transmitted, and 50% of light is reflected. Alternatively, in some implementations, the partially transmissive and partially reflective film 33 may enable 30% of light to be transmitted and 70% of light to be reflected. A light transmission axis of the reflective polarizer 35 is basically perpendicular to a reflection axis, can be configured to reflect light in a polarization direction, and allows light that is basically perpendicular to a polarization direction of the reflected light to pass through.

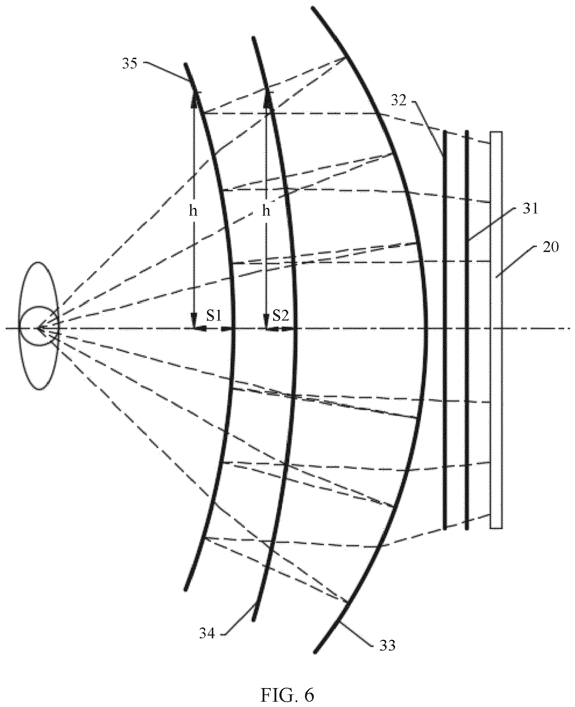

Refer to FIG. 6. FIG. 6 is a schematic diagram of optical paths when light is transmitted through each diaphragm in the optical module 100 according to an implementation of this application. Specifically, light emitted by a display picture of a display 20 first passes through a linear polarizer 31, to obtain linearly polarized light in a linearly polarized state, and then passes through a first quarter-phase retarder 32, and the linearly polarized light is converted into elliptically polarized light by using the first quarter-phase retarder 32. Then, the light passes through the partially transmissive and partially reflective film 33, some light passes through the partially transmissive and partially reflective film 33 and is transmitted to a second quarter-phase retarder 34, the second quarter-phase retarder 34 converts the elliptically polarized light that passes through the partially transmissive and partially reflective film 33 into linearly polarized light, and the part of linearly polarized light is parallel to a reflection axis of a reflective polarizer 35. The linearly polarized light that passes through the second quarter-phase retarder 34 is transmitted to the reflective polarizer 35, and is reflected to the second quarter-phase retarder 34 by the reflective polarizer 35. The light reflected by the reflective polarizer 35 to the second quarter-phase retarder 34 is converted into elliptical polarized light after passing through the second quarter-phase retarder 34, and is then transmitted to the partially transmissive and partially reflective film 33 again. A part of light is reflected on a surface of the partially transmissive and partially reflective film 33 and then transmitted back to the second quarter-phase retarder 34. The second quarter-phase retarder 34 converts elliptically polarized light into linearly polarized light again, and a polarization direction of the linearly polarized light is parallel to a homology axis of the reflective polarizer 35. The light transmitted to the reflective polarizer 35 after passing through the second quarter-phase retarder 34 passes through the reflective polarizer 35 and leaves the optical module 100 and arrives at a human eye, so that the human eye observes the display picture of the display 20.

In an implementation of this application, light is reflected once on both the surface of the partially transmissive and partially reflective film 33 and a surface of the reflective polarizer 35. In this way, light transmitted in the optical module 100 is folded twice between the partially transmissive and partially reflective film 33 and the reflective polarizer 35. This can reduce a total track length of the optical module 100, that is, a distance between the display 20 and the human eye can be reduced while it is ensured that an optical effect of the optical module 100 remains unchanged, thereby implementing thinness and lightness of the electronic device 1000, and facilitating wearing and carrying of the electronic device 1000.

Refer to FIG. 6 again. In this implementation of this application, both the reflective polarizer 35 and the second quarter-phase retarder 34 are bending sheets that bend towards an image side. In this implementation, an imaging location of a lens group A is on a retina of the user. Therefore, a location of the eye of the user is an image side of the lens group A. Therefore, both the reflective polarizer 35 and the second quarter-phase retarder 34 are curved sheets that bend towards the eye of the user. In addition, in some implementations, a surface vector height of the reflective polarizer 35 at a location with an effective aperture of h is S 1, a surface vector height of the second quarter-phase retarder 34 at a location with an effective aperture of h is S2, and the reflective polarizer 35 and the second quarter-phase retarder 34 meet a relationship: S2-S1≤5. This ensures that a curvature radius of the reflective polarizer 35 is smaller than that of the second quarter-phase retarder 34, or that a curvature radius of the reflective polarizer 35 is only slightly larger than that of the second quarter-phase retarder 34, thereby avoiding light leakage. In addition, when the second quarter-phase retarder 34 and the second quarter-phase retarder 34 are respectively laminated to an object side surface and an image side surface that are adjacent and that are of adjacent lenses, because the curvature radius of the reflective polarizer 35 is smaller than that of the second quarter-phase retarder 34, or the curvature radius of the reflective polarizer 35 is slightly larger than that of the second quarter-phase retarder 34, it can be ensured that the two lenses can be disposed as close as possible, and a gap on an axis of the two lenses can be reduced as much as possible, therefore, the total track length of the optical module 100 is reduced. For example, in the implementation shown in FIG. 4, the reflective polarizer 35 is laminated to the object side surface of the first lens 11, and the second quarter-phase retarder 34 is laminated to the image side surface of the second lens 12. Because the curvature radius of the reflective polarizer 35 is less than the curvature radius of the second quarter-phase retarder 34, an axial distance between the first lens 11 and the second lens 12 may be as small as possible, thereby reducing the total track length of the optical module 100 as much as possible. In this implementation, the total track length of the optical module 100 is 14 mm.

In this implementation of this application, the plurality of laminating lenses include a first laminating lens and a second laminating lens. The first laminating lens is a laminating lens that is farthest from the object side, and the second laminating lens is a laminating lens that is closest to the object side. In this implementation, a photographed object of the lens group A is the display 20. Therefore, the object side described in this application is a side on which the display 20 is located. Therefore, the first laminating lens is a laminating lens that is farthest from the display 20, and the second laminating lens is a laminating lens that is closest to the display 20. For example, in the implementation shown in FIG. 4, both the first lens 11 and the second lens 12 are laminating lenses. The first lens 11 is a laminating lens that is in the optical module 100 in the implementation shown in FIG. 4 and that is farthest from the display 20. In other words, the first lens 11 is the first laminating lens of the optical module 100 in the implementation shown in FIG. 4. The second lens 12 is a laminating lens that is in the optical module 100 in the implementation shown in FIG. 4 and that is closest to the display 20. In other words, the second lens 12 is the second laminating lens of the optical module 100 in the implementation shown in FIG. 4.

In some implementations of this application, the reflective polarizer 35 and the second quarter-phase retarder 34 may be laminated to different laminating lenses. In actual production, because costs of the reflective polarizer 35 and the second quarter-phase retarder 34 are high, when the reflective polarizer 35 and the second quarter-phase retarder 34 are laminated to different laminated lenses, a problem of a waste of a diaphragm on one side of a laminated lens caused by poor lamination of the reflective polarizer 35 or the second quarter-phase retarder 34 to the other side of the laminated lens can be avoided. In this way, the problem of production costs caused by defective diaphragm lamination is resolved, thereby reducing production costs of the optical module 100. For example, in the implementation shown in FIG. 4, the reflective polarizer 35 is laminated to the first lens 11, and the second quarter-phase retarder 34 is laminated to the second lens 12.

In some implementations of this application, the reflective polarizer 35 is laminated to an image side surface of the first laminating lens, and the partially transmissive and partially reflective film 33 is laminated to an object side surface of the second laminating lens. In this implementation of this application, because light is folded between the partially transmissive and partially reflective film 33 and the reflective polarizer 35, the optical module 100 in this application can implement a required optical effect, and the total track length of the optical module 100 can be small. Therefore, in this implementation of this application, the reflective polarizer 35 is laminated to the image side surface of the first laminating lens, and the partially transmissive and partially reflective film 33 is laminated to the object side surface of the second laminating lens, so that a distance between the reflective polarizer 35 and the partially transmissive and partially reflective film 33 can be increased as much as possible. This increases a transmission path of light between the reflective polarizer 35 and the partially transmissive and partially reflective film 33 as much as possible, and further reduces the total track length of the optical module 100 while enabling the optical module 100 to implement the same optical effect.

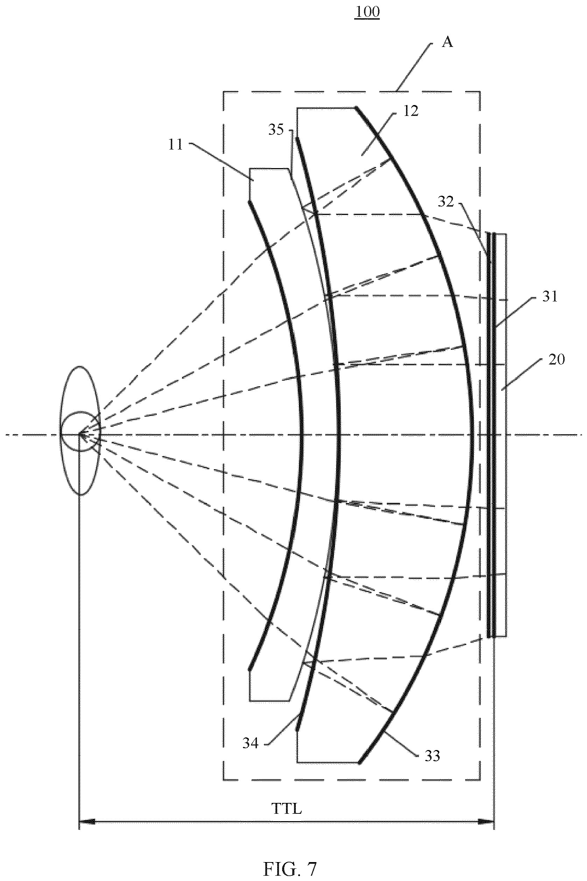

For example, refer to FIG. 7. FIG. 7 is a schematic diagram of a structure of an optical module 100 according to a second implementation of this application. In this implementation, a lens group A included in the optical module 100 includes a first lens 11 and a second lens 12. The first lens 11 is far away from a display 20 relative to the second lens 12. An object side surface of the first lens 11 is a convex surface, and an image side surface is a free curved surface with one inflection. An object side surface of the second lens 12 is a convex surface, and an image side surface of the second lens 12 is a free curved surface with one inflection. Therefore, in the implementation shown in FIG. 7, both the first lens 11 and the second lens 12 are laminating lenses. In addition, in this implementation, the first lens 11 is a laminating lens that is in the optical module 100 in the implementation shown in FIG. 7 and that is farthest from the display 20. In other words, the first lens 11 is the first laminating lens of the optical module 100 in the implementation shown in FIG. 7. The second lens 12 is a laminating lens that is in the optical module 100 in the implementation shown in FIG. 7 and that is closest to the display 20. In other words, the second lens 12 is the second laminating lens of the optical module 100 in the implementation shown in FIG. 7. In this implementation, the reflective polarizer 35 is laminated to an image side surface of the first laminating lens, and the partially transmissive and partially reflective film 33 is laminated to an object side surface of the second laminating lens. This can further reduce a total track length of the optical module 100. In this implementation, the total track length of the optical module 100 is 12 mm.

It may be understood that, in another implementation of this application, the reflective polarizer 35 is laminated to an object side surface of the first laminating lens, or an object side surface or image side surface of another laminating lens. The partially transmissive and partially reflective film 33 may be laminated to an image side surface of the second laminating lens, or an object side surface or image side surface of another laminating lens.

Refer to FIG. 4 again. In some implementations of this application, the laminating lens may be a lens that bends towards the image side, that is, edges of both the object side surface and the image side surface of the laminating lens bend towards the image side relative to a middle position. In this implementation of this application, the laminating lens is designed as a lens that bends towards the image side, so that after light on the object side of the laminating lens is refracted and transmitted to the image side by using the laminating lens, the light can have a better convergence effect. When a user wears the electronic device 1000 in this application, an eye of the user is located on an image side of the lens group A, and in a process in which a picture displayed by a display is refracted and transmitted to the image side by the lens group A, light emitted by a display picture is converged. Therefore, the user can observe a large display picture by using the electronic device 1000 in this application, and the electronic device 1000 in this application can have a good imaging effect. In addition, the edges of both the object side surface and the image side surface of the laminating lens bend towards the image side relative to the middle position. This can reduce an aberration generated when light passes through the lens group A, so that the optical module 100 can implement a better optical effect.

Refer to FIG. 4 again. In some embodiments of this application, the linear polarizer 31 and the first quarter-phase retarder 32 may be integrated into the display 20, that is, the linear polarizer 31, the first quarter-phase retarder 32, and the display 20 are integrated together during manufacturing of the display 20. This can simplify an assembly process of the optical module 100, and further simplify an assembly process of the electronic device 1000. Specifically, in some implementations of this application, when the display 20 is manufactured, both the linear polarizer 31 and the first quarter-phase retarder 32 may be laminated to a light-emitting surface of the display 20, so that the linear polarizer 31 and the first quarter-phase retarder 32 are integrated into the display 20. In a subsequent assembly process of the optical module 100, the display 20 integrated with the linear polarizer 31 and the first quarter-phase retarder 32 is assembled with another lens. It may be understood that, in this implementation of this application, the linear polarizer 31 and the first quarter-phase retarder 32 may alternatively be integrated into the display 20 in another manner. Details are not specifically displayed in this application. For example, in some implementations, a substrate on the light-emitting surface of the display 20 may be directly manufactured to form the linear polarizer 31, so that the linear polarizer 31 is integrated into the display 20.

In some implementations of this application, the plurality of lenses in the lens group A may further include an optical adjustment lens. The optical adjustment lens is configured to adjust an optical effect of the optical module 100. However, an object side surface or an image side surface of the optical adjustment lens cannot be laminated to a diaphragm with high quality. For example, in some implementations of this application, an object side surface or an image side surface of the optical adjustment lens may include a free curved surface with a plurality of inflections. The free curved surface with a plurality of inflections is a free surface with two or more vertices. The free curved surface with a plurality of inflections is not easy to be laminated to a diaphragm with high quality, and therefore, the object side surface or the image side surface of the optical adjustment lens cannot be laminated to a lens with high quality. In this implementation, adding the optical adjustment lens to the lens group A can further adjust the optical effect of the optical module 100, so that the electronic device 1000 can implement a better imaging effect.

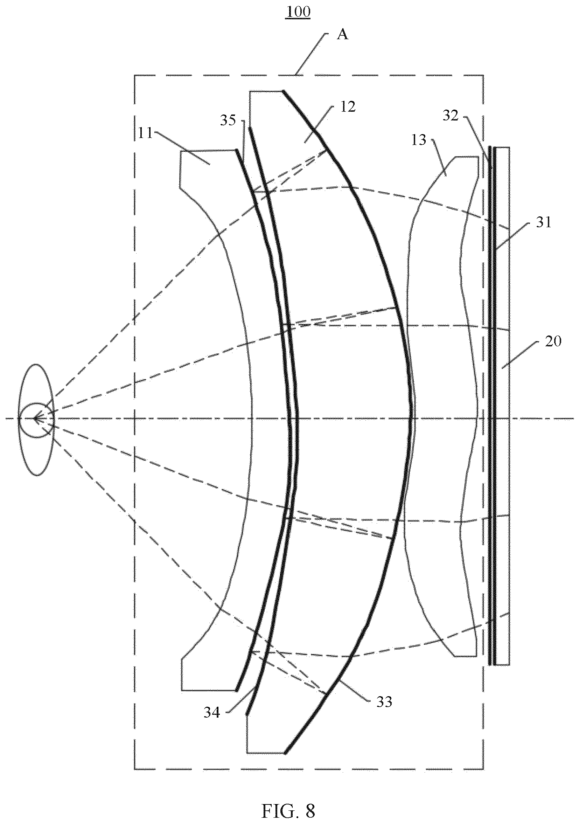

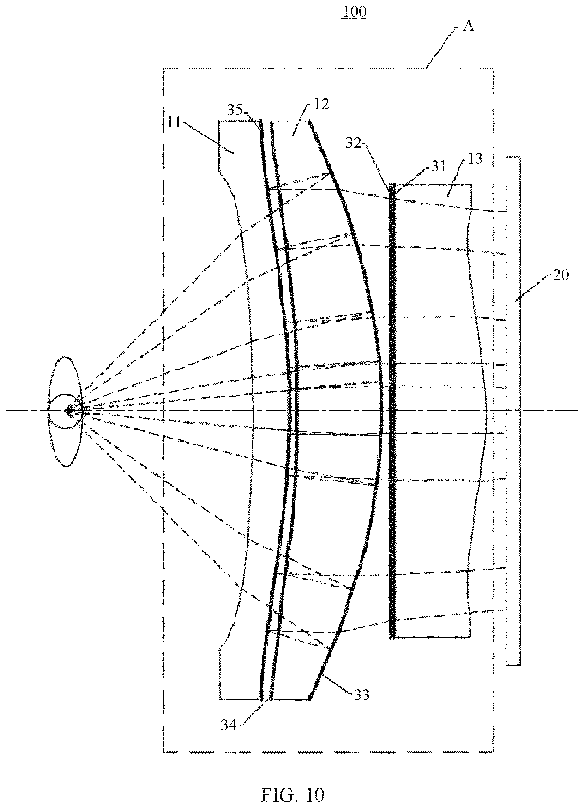

For example, refer to FIG. 8 and FIG. 10. FIG. 8 is a schematic diagram of a structure of an optical module 100 according to a third implementation of this application, and FIG. 10 is a schematic diagram of a structure of an optical module 100 according to a fifth implementation of this application.

The optical module 100 in the implementation shown in FIG. 8 includes three lenses: a first lens 11, a second lens 12, and a third lens 13. The first lens 11, the second lens 12, and the third lens 13 are arranged from a direction away from a display 20 to a direction close to the display 20, and the first lens 11, the second lens 12, and the third lens 13 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. Both an object side surface and an image side surface of the third lens 13 are free surfaces with two inflections, and a cross section of the third lens 13 is M-shaped. Therefore, both the object side surfaces and the image side surfaces of the first lens 11 and the second lens 12 can facilitate diaphragm lamination. To be specific, both the first lens 11 and the second lens 12 are laminating lenses, and neither the object side surface nor the image side surface of the third lens 13 facilitates diaphragm lamination. That is, the third lens 13 in this implementation is an optical adjustment lens configured to adjust the optical module 100.

The optical module 100 in the implementation shown in FIG. 10 includes three lenses: a first lens 11, a second lens 12, and a third lens 13. The first lens 11, the second lens 12, and the third lens 13 are arranged from a direction away from a display 20 to a direction close to the display 20, and the first lens 11, the second lens 12, and the third lens 13 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. An object side surface of the third lens 13 is a free curved surface with two inflections, and an image side surface of the third lens 13 is a plane. Therefore, both the object side surfaces and the image side surfaces of the first lens 11 and the second lens 12 can facilitate diaphragm lamination. To be specific, both the first lens 11 and the second lens 12 are laminating lenses, and the object side surface of the third lens 13 does not facilitate diaphragm lamination. That is, the third lens 13 in this implementation is an optical adjustment lens configured to adjust the optical module 100.

It should be noted that, in another implementation of this application, the optical adjustment lens may be in another shape, or there may be two or more optical adjustment lenses. The two or more optical adjustment lenses may be disposed between the optical adjustment lens and the display 20, between the first laminating lens and the second laminating lens, between the second laminating lens and the optical adjustment lens, or at any location on a side that is of the first laminating lens and that is away from the second laminating lens.

The following describes some specific but non-limiting examples of the implementations of this application in more detail with reference to FIG. 4, and FIG. 7 to FIG. 15.

Refer to FIG. 4. FIG. 4 is a schematic diagram of a structure of an optical module 100 according to a first implementation of this application. In this implementation, a lens group A of the optical module 100 includes two lenses. The two lenses are respectively a first lens 11 and a second lens 12. The first lens 11 is away from a display 20 relative to the second lens 12, and the first lens 11 and the second lens 12 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. Therefore, both the object side surfaces and the image side surfaces of the first lens 11 and the second lens 12 can facilitate diaphragm lamination, that is, both the first lens 11 and the second lens 12 are laminating lenses. The first lens 11 is a laminating lens farthest from the display 20. That is, the first lens 11 is the first laminating lens of the optical module 100 in the implementation. The second lens 12 is a laminating lens closest to the display 20. That is, the second lens 12 is the second laminating lens of the optical module 100 in the implementation.

Design parameters of the optical module 100 in the first implementation of this application are shown in Table 1.

**Table 1 Design parameters of the optical module 100 in the first implementation**

| | Curvature radius (mm) | Thickness (mm) | Materials |
|---|---|---|---|
| Optical pupil | Infinity | 12.3 | - |
| First lens S1 | -39.53 | 1.57 | Plastic |
| First lens S2 | -32.66 | 0.89 | - |
| Second lens S1 | -41.42 | 8.38 | Plastic |
| Second lens S2 | -31.30 | 1.2 | - |

The optical pupil is a pupil of the user, and a thickness value of a row in which the optical pupil is located indicates a distance between the pupil of the user and the first lens 11 when the user wears the electronic device 1000 in this implementation.

The first lens S 1 indicates the image side surface of the first lens 11. A curvature radius value of a row in which the first lens S 1 is located indicates a curvature radius of the image side surface of the first lens 11. A thickness value of the row in which the first lens S1 is located is an on-axis distance from the image side surface of the first lens 11 to the object side surface, that is, an on-axis thickness of the first lens 11.

The first lens S2 indicates the object side surface of the first lens 11. A curvature radius value of a row in which the first lens S2 is located indicates a curvature radius of the object side surface of the first lens 11. A thickness value of the row in which the first lens S2 is located is an on-axis distance from the object side surface of the first lens 11 to the image side surface of the second lens 12.

The second lens S3 indicates the image side surface of the second lens 12. A curvature radius value of a row in which the second lens S3 is located indicates a curvature radius of the image side surface of the second lens 12. A thickness value of the row in which the second lens S3 is located is an on-axis distance from the image side surface of the second lens 12 to the object side surface, that is, an on-axis thickness of the second lens 12.

The second lens S4 indicates the object side surface of the second lens 12. A curvature radius value of a row in which the second lens S4 is located indicates a curvature radius of the object side surface of the second lens 12. A thickness value of the row in which the second lens S4 is located is an on-axis distance from the object side surface of the second lens 12 to a surface of the display 20.

In this implementation, diaphragms of the optical module 100 include the linear polarizer 31, the first quarter-phase retarder 32, the partially transmissive and partially reflective film 33, the second quarter-phase retarder 34, and the reflective polarizer 35. The linear polarizer 31, the first quarter-phase retarder 32, the partially transmissive and partially reflective film 33, the second quarter-phase retarder 34, and the reflective polarizer 35 are sequentially arranged from a side close to the display 20 to a side away from the display 20. Specifically, in this implementation, the linear polarizer 31 and the first quarter-phase retarder 32 are sequentially superposed on the light-emitting surface of the display 20. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11.

Light of a display picture of the display 20 is transmitted to the image side surface of the second lens 12 after successively passing through the linear polarizer 31 and the first quarter-phase retarder 32, and a part of the light that is irradiated to the image side surface of the second lens 12 passes through the partially transmissive and partially reflective film 33. The light that passes through the partially transmissive and partially reflective film 33 sequentially passes through the second lens 12 and the second quarter-phase retarder 34, and is transmitted to the object side surface of the first lens 11. In this case, a polarization direction of the light transmitted to the object side surface of the first lens 11 is parallel to a reflection axis direction of the reflective polarizer 35. The light transmitted to the object side surface of the first lens 11 is reflected by the reflective polarizer 35, and the reflected light sequentially passes through the second quarter-phase retarder 34 and the second lens 12 and is then transmitted to the partially transmissive and partially reflective film 33. Some light is reflected by the partially transmissive and partially reflective film 33. In this case, a polarization direction of the light that is reflected by the partially transmissive and partially reflective film 33 is parallel to a homology axis direction of the reflective polarizer 35, and the light that is reflected by the partially transmissive and partially reflective film 33 can sequentially pass through the second lens 12, the second quarter-phase retarder 34, the reflective polarizer 35, and the first lens 11 and be illuminated to a human eye, so that the user can observe a picture displayed on the display 20.

In this implementation, the light is reflected once on both a surface of the reflective polarizer 35 and the surface of the partially transmissive and partially reflective film 33, so that the light is folded twice between the reflective polarizer 35 and the partially transmissive and partially reflective film 33. Therefore, the total track length of the optical module 100 is smaller when a same optical effect is achieved. In addition, in this implementation, the linear polarizer 31 and the first quarter-phase retarder 32 are sequentially superposed on the light-emitting surface of the display 20. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11. Therefore, there is no need to add a flat lens specially used for diaphragm lamination. This can avoid increasing a quantity of lenses, and avoid increasing the total track length and the weight of the optical module 100. In addition, both the object side surfaces and the image side surfaces of the first lens 11 and the second lens 12 are curved surfaces, and the object side surface or the image side surface of the first lens 11 or the second lens 12 is not specially designed as a plane to facilitate diaphragm lamination. Therefore, this can achieve an effect of reducing an optical aberration by adding curved surfaces, and reduce a thickness of the lens and shorten the total track length of the optical module 100 while ensuring a required optical effect. In addition, the reflective polarizer 35 and the second quarter-phase retarder 34 are respectively laminated to different laminating lenses. This can avoid a problem that the reflective polarizer 35 or the second quarter-phase retarder 34 laminated on a side of a lens is scrapped when the reflective polarizer 35 or the second quarter-phase retarder 34 is poorly laminated on the other side of the lens, thus reducing production costs.

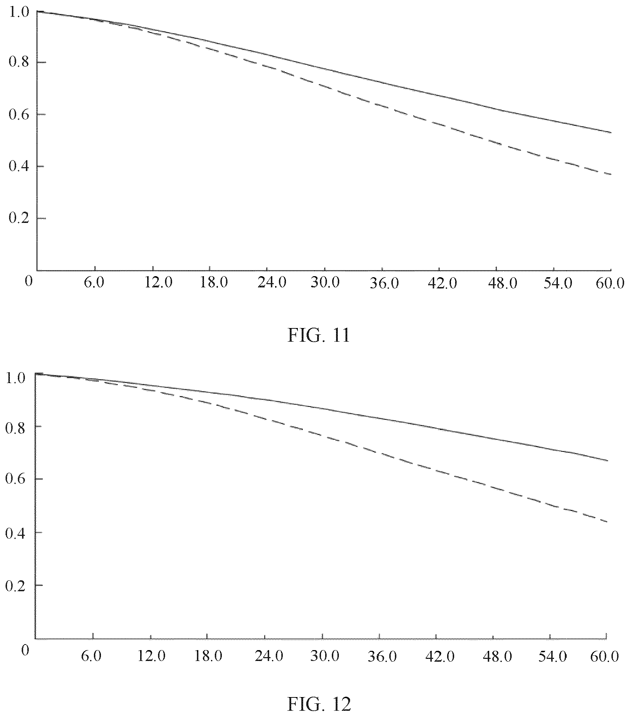

The optical module 100 in this implementation can be obtained based on the design parameters of the foregoing lenses and the lamination locations of the diaphragms. The optical module 100 in this application can achieve a good optical effect, and have a short total track length and a light weight. Refer to FIG. 11. FIG. 11 is a representation diagram of optical performance of the optical module 100 according to the first implementation. In FIG. 11, a horizontal coordinate is a spatial frequency, and a unit is line pair/mm (LP/mm); and a vertical coordinate is a spatial modulation function, and corresponds to a local contrast value of each current line pair number. Implementation in the figure indicates a curve of a relationship between a spatial frequency in a meridian direction of imaging performed by the optical module 100 and a spatial modulation function in this implementation, and a dashed line indicates a curve of a relationship between a spatial frequency in an arc vector direction of imaging performed by the optical module 100 and a spatial modulation function in this implementation. It can be learned from FIG. 11 that, when the spatial modulation function is greater than 0.3, imaging definition of the optical module 100 in this implementation is greater than 60 lp/mm, that is, the optical module 100 in this implementation has high definition. In addition, in this implementation, a total track length of an optical lens is approximately 14 mm, and a weight of the lenses is less than 9 g. Therefore, the optical module 100 in this implementation has a good optical effect and a small total track length and weight, so that the electronic device 1000 including the optical module 100 can also have a small thickness and a light weight, thereby improving portability and wearing experience of the electronic device 1000.

Refer to FIG. 7. FIG. 7 is a schematic diagram of a structure of an optical module 100 according to a second implementation of this application. In this implementation, a lens group A of the optical module 100 includes two lenses. The two lenses are respectively a first lens 11 and a second lens 12. The first lens 11 is away from a display 20 relative to the second lens 12, and the first lens 11 and the second lens 12 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. Therefore, both the object side surfaces and the image side surfaces of the first lens 11 and the second lens 12 can facilitate diaphragm lamination, that is, both the first lens 11 and the second lens 12 are laminating lenses. The first lens 11 is a laminating lens farthest from the display 20. That is, the first lens 11 is the first laminating lens of the optical module 100 in the implementation. The second lens 12 is a laminating lens closest to the display 20. That is, the second lens 12 is the second laminating lens of the optical module 100 in the implementation.

Design parameters of the optical module 100 in the second implementation of this application are shown in Table 2.

**Table 2 Design parameters of the optical module 100 in the second implementation**

| | Curvature radius (mm) | Thickness (mm) | Materials |
|---|---|---|---|
| Optical pupil | Infinity | 10 | - |
| First lens S1 | -96.12 | 2.3 | Plastic |
| First lens S2 | 44.30 | 0.66 | - |
| Second lens S1 | 48.48 | 7.50 | Plastic |
| Second lens S2 | -41.55 | 1 | - |

The optical pupil is a pupil of the user, and a thickness value of a row in which the optical pupil is located indicates a distance between the pupil of the user and the first lens 11 when the user wears the electronic device 1000 in this implementation.

The first lens S1 indicates the image side surface of the first lens 11. A curvature radius value of a row in which the first lens S1 is located indicates a curvature radius of the image side surface of the first lens 11. A thickness value of the row in which the first lens S1 is located is an on-axis distance from the image side surface of the first lens 11 to the object side surface, that is, an on-axis thickness of the first lens 11.

The first lens S2 indicates the object side surface of the first lens 11. A curvature radius value of a row in which the first lens S2 is located indicates a curvature radius of the object side surface of the first lens 11. A thickne ss value of the row in which the first lens S2 is located is an on-axis distance from the object side surface of the first lens 11 to the image side surface of the second lens 12.

The second lens S3 indicates the image side surface of the second lens 12. A curvature radius value of a row in which the second lens S3 is located indicates a curvature radius of the image side surface of the second lens 12. A thickness value of the row in which the second lens S3 is located is an on-axis distance from the image side surface of the second lens 12 to the object side surface, that is, an on-axis thickness of the second lens 12.

The second lens S4 indicates the object side surface of the second lens 12. A curvature radius value of a row in which the second lens S4 is located indicates a curvature radius of the object side surface of the second lens 12. A thickness value of the row in which the second lens S4 is located is an on-axis distance from the object side surface of the second lens 12 to a surface of the display 20.

In this implementation, diaphragms of the optical module 100 include the linear polarizer 31, the first quarter-phase retarder 32, the partially transmissive and partially reflective film 33, the second quarter-phase retarder 34, and the reflective polarizer 35. The linear polarizer 31, the first quarter-phase retarder 32, the partially transmissive and partially reflective film 33, the second quarter-phase retarder 34, and the reflective polarizer 35 are sequentially arranged from a side close to the display 20 to a side away from the display 20. Specifically, in this implementation, the linear polarizer 31 and the first quarter-phase retarder 32 are sequentially superposed on the light-emitting surface of the display 20. The partially transmissive and partially reflective film 33 is laminated to the object side surface of the second lens 12, the second quarter-phase retarder 34 is laminated to the object side surface of the first lens 11, and the reflective polarizer 35 is laminated to the image side surface of the first lens 11.

Light of a display picture of the display 20 is transmitted to the image side surface of the second lens 12 after successively passing through the linear polarizer 31 and the first quarter-phase retarder 32, and a part of the light that is irradiated to the image side surface of the second lens 12 passes through the partially transmissive and partially reflective film 33. The light that passes through the partially transmissive and partially reflective film 33 sequentially passes through the second lens 12, the second quarter-phase retarder 34, and the first lens 11, and is transmitted to the image side surface of the first lens 11. In this case, a polarization direction of the light transmitted to the image side surface of the first lens 11 is parallel to a reflection axis direction of the reflective polarizer 35. The light transmitted to the image side surface of the first lens 11 is reflected by the reflective polarizer 35, and the reflected light sequentially passes through the first lens 11, the second quarter-phase retarder 34, and the second lens 12, and is then transmitted to the partially transmissive and partially reflective film 33. Some light is reflected by the partially transmissive and partially reflective film 33. In this case, a polarization direction of the light that is reflected by the partially transmissive and partially reflective film 33 is parallel to a homology axis direction of the reflective polarizer 35, and the light that is reflected by the partially transmissive and partially reflective film 33 can sequentially pass through the second lens 12, the second quarter-phase retarder 34, the first lens 11, and the reflective polarizer 35, and be illuminated to a human eye, so that the user can observe a picture displayed on the display 20.

In this implementation, the light is reflected once on both a surface of the reflective polarizer 35 and the surface of the partially transmissive and partially reflective film 33, so that the light is folded twice between the reflective polarizer 35 and the partially transmissive and partially reflective film 33. Therefore, the total track length of the optical module 100 is smaller when a same optical effect is achieved. In addition, in this implementation, the reflective polarizer 35 is laminated to the image side surface of the first lens 11, and the second quarter-phase retarder 34 is laminated to the object side surface of the second lens 12. In this case, a distance between the reflective polarizer 35 and the second quarter-phase retarder 34 can be large, so that a light transmission optical path between the reflective polarizer 35 and the second quarter-phase retarder 34 is long, thereby further shortening the total track length of the optical module 100. The linear polarizer 31 and the first quarter-phase retarder 32 are sequentially superposed on the light-emitting surface of the display 20. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11. Therefore, there is no need to add a flat lens specially used for diaphragm lamination. This can avoid increasing a quantity of lenses, and avoid increasing the total track length and the weight of the optical module 100. In addition, both the object side surfaces and the image side surfaces of the first lens 11 and the second lens 12 are curved surfaces, and the object side surface or the image side surface of the first lens 11 or the second lens 12 is not specially designed as a plane to facilitate diaphragm lamination. Therefore, this can achieve an effect of reducing an optical aberration by adding curved surfaces, and reduce a thickness of the lens and shorten the total track length of the optical module 100 while ensuring a required optical effect.

The optical module 100 in this implementation can be obtained based on the design parameters of the foregoing lenses and the lamination locations of the diaphragms. The optical module 100 in this application can achieve a good optical effect, and have a short total track length and a light weight. Refer to FIG. 12. FIG. 12 is a representation diagram of optical performance of the optical module 100 according to the second implementation. In FIG. 12, a horizontal coordinate is a spatial frequency, and a unit is line pair/mm (LP/mm); and a vertical coordinate is a spatial modulation function, and corresponds to a local contrast value of each current line pair number. Implementation in the figure indicates a curve of a relationship between a spatial frequency in a meridian direction of imaging performed by the optical module 100 and a spatial modulation function in this implementation, and a dashed line indicates a curve of a relationship between a spatial frequency in an arc vector direction of imaging performed by the optical module 100 and a spatial modulation function in this implementation.

It can be learned from FIG. 12 that, when the spatial modulation function is greater than 0.3, imaging definition of the optical module 100 in this implementation is greater than 60 lp/mm, that is, the optical module 100 in this implementation has high definition. In addition, in this implementation, a total track length of an optical lens is approximately 12 mm, and a weight of the lenses is less than 8 g. Therefore, the optical module 100 in this implementation has a good optical effect and a small total track length and weight, so that the electronic device 1000 including the optical module 100 can also have a small thickness and a light weight, thereby improving portability and wearing experience of the electronic device 1000.

Refer to FIG. 8. FIG. 8 is a schematic diagram of a structure of an optical module 100 according to a third implementation of this application. In this implementation, the lens group A of the optical module 100 includes three lenses. The three lenses are a first lens 11, a second lens 12, and a third lens 13. The first lens 11, the second lens 12, and the third lens 13 are arranged from a direction away from a display 20 to a direction close to the display 20, and the first lens 11, the second lens 12, and the third lens 13 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. Both an object side surface and an image side surface of the third lens are free surfaces with two inflections, and a cross section of the third lens is M-shaped. Therefore, both the object side surfaces and the image side surfaces of the first lens 11 and the second lens 12 can facilitate diaphragm lamination. To be specific, both the first lens 11 and the second lens 12 are laminating lenses, and the third lens 13 is an optical adjustment lens configured to adjust the optical module 100. The first lens 11 is a laminating lens farthest from the display 20. That is, the first lens 11 is the first laminating lens of the optical module 100 in the implementation. The second lens 12 is a laminating lens closest to the display 20. That is, the second lens 12 is the second laminating lens of the optical module 100 in the implementation.

Design parameters of the optical module 100 in the third implementation of this application are shown in Table 3.

**Table 3 Design parameters of the optical module 100 in the third implementation**

| | Curvature radius (mm) | Thickness (mm) | Materials |
|---|---|---|---|
| Optical pupil | Infinity | 12.7 | - |
| First lens S1 | -34.81 | 2 | Plastic |
| First lens S2 | -37.94 | 0.3 | - |
| Second lens S1 | 47.48 | 6.74 | Plastic |
| Second lens S2 | -30.77 | 0.2 | - |
| Third lens S1 | -202.05 | 4.5 | Glass |
| Third lens S2 | -48.75 | 1 | - |

The optical pupil is a pupil of the user, and a thickness value of a row in which the optical pupil is located indicates a distance between the pupil of the user and the first lens 11 when the user wears the electronic device 1000 in this implementation.

The first lens S1 indicates the image side surface of the first lens 11. A curvature radius value of a row in which the first lens S1 is located indicates a curvature radius of the image side surface of the first lens 11. A thickness value of the row in which the first lens S1 is located is an on-axis distance from the image side surface of the first lens 11 to the object side surface, that is, an on-axis thickness of the first lens 11.

The first lens S2 indicates the object side surface of the first lens 11. A curvature radius value of a row in which the first lens S2 is located indicates a curvature radius of the object side surface of the first lens 11. A thickness value of the row in which the first lens S2 is located is an on-axis distance from the object side surface of the first lens 11 to the image side surface of the second lens 12.

The second lens S3 indicates the image side surface of the second lens 12. A curvature radius value of a row in which the second lens S3 is located indicates a curvature radius of the image side surface of the second lens 12. A thickness value of the row in which the second lens S3 is located is an on-axis distance from the image side surface of the second lens 12 to the object side surface, that is, an on-axis thickness of the second lens 12.

The second lens S4 indicates the object side surface of the second lens 12. A curvature radius value of a row in which the second lens S4 is located indicates a curvature radius of the object side surface of the second lens 12. A thickness value of the row in which the second lens S4 is located is an on-axis distance from the object side surface of the second lens 12 to an image side surface of the third lens 13.

The third lens S5 indicates the image side surface of the third lens 13. A curvature radius value of a row in which the third lens S5 is located indicates a curvature radius of the image side surface of the third lens 13. A thickness value of the row in which the third lens S5 is located is an on-axis distance from the image side surface of the third lens 13 to the object side surface, that is, an on-axis thickness of the third lens 13.

The third lens S6 indicates the object side surface of the third lens 13. A curvature radius value of a row in which the third lens S6 is located indicates a curvature radius of the object side surface of the third lens 13. A thickness value of the row in which the third lens S6 is located is an on-axis distance from the object side surface of the third lens 13 to a surface of the display 20.

In this implementation, diaphragms of the optical module 100 include the linear polarizer 31, the first quarter-phase retarder 32, the partially transmissive and partially reflective film 33, the second quarter-phase retarder 34, and the reflective polarizer 35. The linear polarizer 31, the first quarter-phase retarder 32, the partially transmissive and partially reflective film 33, the second quarter-phase retarder 34, and the reflective polarizer 35 are sequentially arranged from a side close to the display 20 to a side away from the display 20. Specifically, in this implementation, the linear polarizer 31 and the first quarter-phase retarder 32 are sequentially superposed on the light-emitting surface of the display 20. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11.

Light of a display picture of the display 20 is transmitted to the image side surface of the second lens 12 after successively passing through the linear polarizer 31 and the first quarter-phase retarder 32, and a part of the light that is irradiated to the image side surface of the second lens 12 passes through the partially transmissive and partially reflective film 33. The light that passes through the partially transmissive and partially reflective film 33 sequentially passes through the second lens 12 and the second quarter-phase retarder 34, and is transmitted to the object side surface of the first lens 11. In this case, a polarization direction of the light transmitted to the object side surface of the first lens 11 is parallel to a reflection axis direction of the reflective polarizer 35. The light transmitted to the object side surface of the first lens 11 is reflected by the reflective polarizer 35, and the reflected light sequentially passes through the second quarter-phase retarder 34 and the second lens 12 and is then transmitted to the partially transmissive and partially reflective film 33. Some light is reflected by the partially transmissive and partially reflective film 33. In this case, a polarization direction of the light that is reflected by the partially transmissive and partially reflective film 33 is parallel to a homology axis direction of the reflective polarizer 35, and the light that is reflected by the partially transmissive and partially reflective film 33 can sequentially pass through the second lens 12, the second quarter-phase retarder 34, the reflective polarizer 35, and the first lens 11 and be illuminated to a human eye, so that the user can observe a picture displayed on the display 20.

In this implementation, the light is reflected once on both a surface of the reflective polarizer 35 and the surface of the partially transmissive and partially reflective film 33, so that the light is folded twice between the reflective polarizer 35 and the partially transmissive and partially reflective film 33. Therefore, the total track length of the optical module 100 is smaller when a same optical effect is achieved. In addition, in this implementation, the linear polarizer 31 and the first quarter-phase retarder 32 are sequentially superposed on the light-emitting surface of the display 20. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11. Therefore, there is no need to add a flat lens specially used for diaphragm lamination. This can avoid increasing a quantity of lenses, and avoid increasing the total track length and the weight of the optical module 100. In addition, both the object side surfaces and the image side surfaces of the first lens 11 and the second lens 12 are curved surfaces, and the object side surface or the image side surface of the first lens 11 or the second lens 12 is not specially designed as a plane to facilitate diaphragm lamination. Therefore, this can achieve an effect of reducing an optical aberration by adding curved surfaces, and reduce a thickness of the lens and shorten the total track length of the optical module 100 while ensuring a required optical effect. In addition, the reflective polarizer 35 and the second quarter-phase retarder 34 are respectively laminated to different laminating lenses. This can avoid a problem that the reflective polarizer 35 or the second quarter-phase retarder 34 laminated on a side of a lens is scrapped when the reflective polarizer 35 or the second quarter-phase retarder 34 is poorly laminated on the other side of the lens, thus reducing production costs.

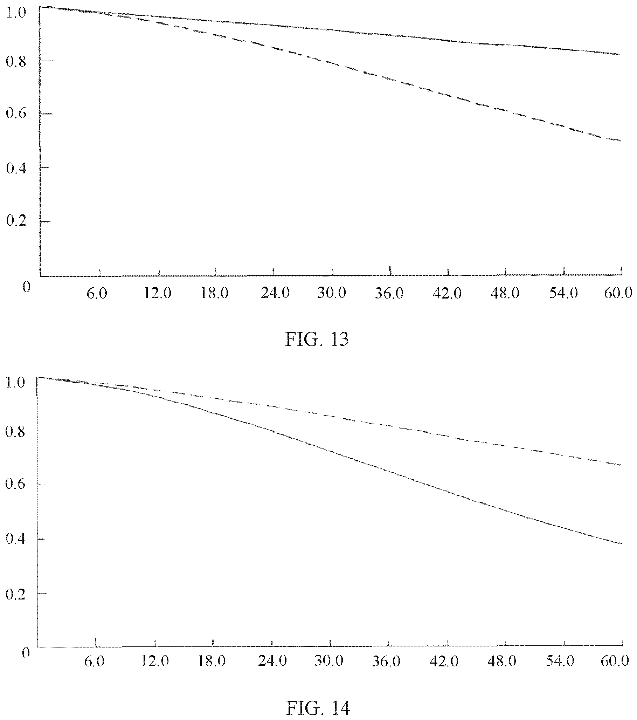

The optical module 100 in this implementation can be obtained based on the design parameters of the foregoing lenses and the lamination locations of the diaphragms. The optical module 100 in this application can achieve a good optical effect, and have a short total track length and a light weight. In addition, compared with the first implementation and the second implementation, the lens group A of the optical module 100 in this implementation includes three lenses, so that the optical module 100 in this implementation can have a better optical effect. Refer to FIG. 13. FIG. 13 is a representation diagram of optical performance of the optical module 100 according to the third implementation. In FIG. 13, a horizontal coordinate is a spatial frequency, and a unit is line pair/mm (LP/mm); and a vertical coordinate is a spatial modulation function, and corresponds to a local contrast value of each current line pair number. Implementation in the figure indicates a curve of a relationship between a spatial frequency in a meridian direction of imaging performed by the optical module 100 and a spatial modulation function in this implementation, and a dashed line indicates a curve of a relationship between a spatial frequency in an arc vector direction of imaging performed by the optical module 100 and a spatial modulation function in this implementation.

It can be learned from FIG. 13 that when the spatial modulation function is greater than 0.3, imaging definition of the optical module 100 in this implementation is greater than 60 lp/mm, and definition of the optical module 100 in this implementation is higher than that of the optical module 100 in the first implementation and that of the optical module 100 in the second implementation. In addition, in this implementation, a total track length of an optical lens is approximately 19 mm, a weight of the lenses is less than 23 g, and a weight of the two plastic lenses is less than 12.5 g. Therefore, the optical module 100 in this implementation has a good optical effect and a small total track length and weight, so that the electronic device 1000 including the optical module 100 can also have a small thickness and a light weight, thereby improving portability and wearing experience of the electronic device 1000.

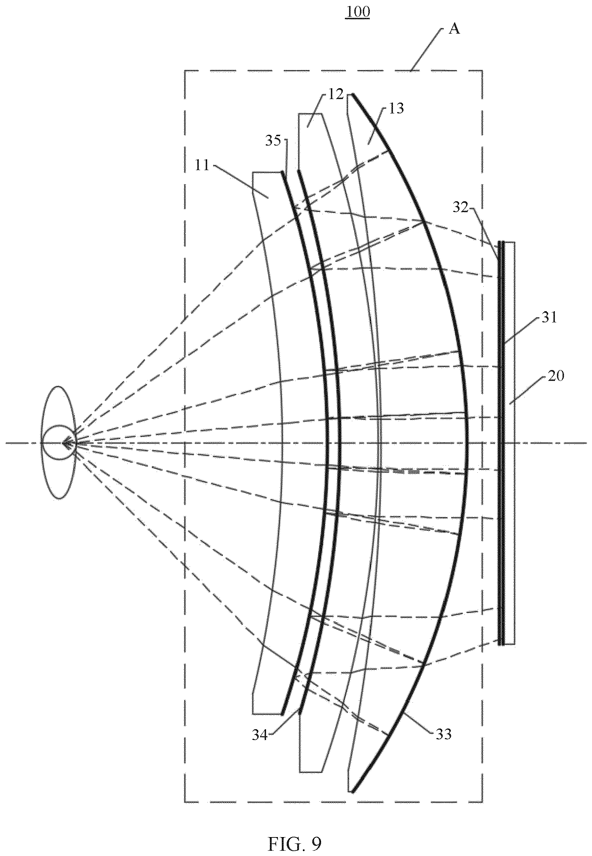

Refer to FIG. 9. FIG. 9 is a schematic diagram of a structure of an optical module 100 according to a fourth implementation of this application. In this implementation, the lens group A of the optical module 100 includes three lenses. The three lenses are a first lens 11, a second lens 12, and a third lens 13. The first lens 11, the second lens 12, and the third lens 13 are arranged from a direction away from a display 20 to a direction close to the display 20, and the first lens 11, the second lens 12, and the third lens 13 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. An object side surface of the third lens 13 is a convex surface, and an image side surface of the third lens 13 is a free curved surface with one inflection. Therefore, both the object side surfaces and the image side surfaces of the first lens 11, the second lens 12, and the third lens 13 can facilitate diaphragm lamination, that is, the first lens 11, the second lens 12, and the third lens 13 are laminating lenses. The first lens 11 is a laminating lens farthest from the display 20. That is, the first lens 11 is the first laminating lens of the optical module 100 in the implementation. The third lens 13 is a laminating lens closest to the display 20. That is, the third lens 13 is the second laminating lens of the optical module 100 in the implementation.

Design parameters of the optical module 100 in the fourth implementation of this application are shown in Table 4.

**Table 4 Design parameters of the optical module 100 in the fourth implementation**

| | Curvature radius (mm) | Thickness (mm) | Materials |
|---|---|---|---|
| Optical pupil | Infinity | 11.7 | - |
| First lens S1 | 76.8 | 1.96 | Plastic |
| First lens S2 | -34.8 | 0.33 | - |
| Second lens S1 | 36.04 | 2.1 | Plastic |
| Second lens S2 | -50.30 | 0.1 | - |
| Third lens S1 | -90.1 | 4.5 | Plastic |
| Third lens S2 | -35.1 | 1.9 | - |

The optical pupil is a pupil of the user, and a thickness value of a row in which the optical pupil is located indicates a distance between the pupil of the user and the first lens 11 when the user wears the electronic device 1000 in this implementation.

The first lens S 1 indicates the image side surface of the first lens 11. A curvature radius value of a row in which the first lens S 1 is located indicates a curvature radius of the image side surface of the first lens 11. A thickness value of the row in which the first lens S1 is located is an on-axis distance from the image side surface of the first lens 11 to the object side surface, that is, an on-axis thickness of the first lens 11.

The first lens S2 indicates the object side surface of the first lens 11. A curvature radius value of a row in which the first lens S2 is located indicates a curvature radius of the object side surface of the first lens 11. A thickne ss value of the row in which the first lens S2 is located is an on-axis distance from the object side surface of the first lens 11 to the image side surface of the second lens 12.

The second lens S3 indicates the image side surface of the second lens 12. A curvature radius value of a row in which the second lens S3 is located indicates a curvature radius of the image side surface of the second lens 12. A thickness value of the row in which the second lens S3 is located is an on-axis distance from the image side surface of the second lens 12 to the object side surface, that is, an on-axis thickness of the second lens 12.

The second lens S4 indicates the object side surface of the second lens 12. A curvature radius value of a row in which the second lens S4 is located indicates a curvature radius of the object side surface of the second lens 12. A thickness value of the row in which the second lens S4 is located is an on-axis distance from the object side surface of the second lens 12 to an image side surface of the third lens 13.

The third lens S5 indicates the image side surface of the third lens 13. A curvature radius value of a row in which the third lens S5 is located indicates a curvature radius of the image side surface of the third lens 13. A thickness value of the row in which the third lens S5 is located is an on-axis distance from the image side surface of the third lens 13 to the object side surface, that is, an on-axis thickness of the third lens 13.

The third lens S6 indicates the object side surface of the third lens 13. A curvature radius value of a row in which the third lens S6 is located indicates a curvature radius of the object side surface of the third lens 13. A thickness value of the row in which the third lens S6 is located is an on-axis distance from the object side surface of the third lens 13 to a surface of the display 20.

In this implementation, diaphragms of the optical module 100 include the linear polarizer 31, the first quarter-phase retarder 32, the partially transmissive and partially reflective film 33, the second quarter-phase retarder 34, and the reflective polarizer 35. The linear polarizer 31, the first quarter-phase retarder 32, the partially transmissive and partially reflective film 33, the second quarter-phase retarder 34, and the reflective polarizer 35 are sequentially arranged from a side close to the display 20 to a side away from the display 20. Specifically, in this implementation, the linear polarizer 31 and the first quarter-phase retarder 32 are sequentially superposed on the light-emitting surface of the display 20. The partially transmissive and partially reflective film 33 is laminated to the object side surface of the third lens 13, the second quarter-phase retarder 34 is laminated to the image side surface of the second lens 12, and the reflective polarizer 35 is laminated to the object side surface of the first lens 11.

Light of a display picture of the display 20 is transmitted to the image side surface of the third lens 13 after successively passing through the linear polarizer 31 and the first quarter-phase retarder 32, and a part of the light that is irradiated to the image side surface of the third lens 13 passes through the partially transmissive and partially reflective film 33. The light that passes through the partially transmissive and partially reflective film 33 sequentially passes through the third lens 13, the second lens 12 and the second quarter-phase retarder 34, and is transmitted to the object side surface of the first lens 11. In this case, a polarization direction of the light transmitted to the object side surface of the first lens 11 is parallel to a reflection axis direction of the reflective polarizer 35. The light transmitted to the object side surface of the first lens 11 is reflected by the reflective polarizer 35, and the reflected light sequentially passes through the second quarter-phase retarder 34, the second lens 12, and the third lens 13, and is then transmitted to the partially transmissive and partially reflective film 33. Some light is reflected by the partially transmissive and partially reflective film 33. In this case, a polarization direction of the light that is reflected by the partially transmissive and partially reflective film 33 is parallel to a homology axis direction of the reflective polarizer 35, and the light that is reflected by the partially transmissive and partially reflective film 33 can sequentially pass through the third lens 13, the second lens 12, the second quarter-phase retarder 34, the reflective polarizer 35, and the first lens 11 and be illuminated to a human eye, so that the user can observe a picture displayed on the display 20.

In this implementation, the light is reflected once on both a surface of the reflective polarizer 35 and the surface of the partially transmissive and partially reflective film 33, so that the light is folded twice between the reflective polarizer 35 and the partially transmissive and partially reflective film 33. Therefore, the total track length of the optical module 100 is smaller when a same optical effect is achieved. In addition, in this implementation, the reflective polarizer 35 is laminated to the first lens 11, and the partially transmissive and partially reflective film 33 is laminated to the third lens 13. Therefore, a distance between the reflective polarizer 35 and the partially transmissive and partially reflective film 33 is large, so that light can be transmitted for a long distance between the reflective polarizer 35 and the partially transmissive and partially reflective film 33, thereby further reducing the total track length of the optical module 100 while implementing the same optical effect. In this implementation, the linear polarizer 31 and the first quarter-phase retarder 32 are sequentially superposed on the light-emitting surface of the display 20. The partially transmissive and partially reflective film 33 is laminated to the object side surface of the third lens 13, the second quarter-phase retarder 34 is laminated to the image side surface of the second lens 12, and the reflective polarizer 35 is laminated to the object side surface of the first lens 11. Therefore, there is no need to add a flat lens specially used for diaphragm lamination. This can avoid increasing a quantity of lenses, and avoid increasing the total track length and the weight of the optical module 100. In addition, the object side surfaces and the image side surfaces of the first lens 11, the second lens 12, and the third lens 13 are curved surfaces, and the object side surface or the image side surface of the first lens 11, the second lens 12, or the third lens 13 is not specially designed as a plane to facilitate diaphragm lamination. Therefore, this can achieve an effect of reducing an optical aberration by adding curved surfaces, and reduce a thickness of the lens and shorten the total track length of the optical module 100 while ensuring a required optical effect. In addition, the reflective polarizer 35 and the second quarter-phase retarder 34 are respectively laminated to different laminating lenses. This can avoid a problem that the reflective polarizer 35 or the second quarter-phase retarder 34 laminated on a side of a lens is scrapped when the reflective polarizer 35 or the second quarter-phase retarder 34 is poorly laminated on the other side of the lens, thus reducing production costs.

The optical module 100 in this implementation can be obtained based on the design parameters of the foregoing lenses and the lamination locations of the diaphragms. The optical module 100 in this application can achieve a good optical effect, and have a short total track length and a light weight. Refer to FIG. 14. FIG. 14 is a representation diagram of optical performance of the optical module 100 according to the fourth implementation. In FIG. 14, a horizontal coordinate is a spatial frequency, and a unit is line pair/mm (LP/mm); and a vertical coordinate is a spatial modulation function, and corresponds to a local contrast value of each current line pair number. Implementation in the figure indicates a curve of a relationship between a spatial frequency in a meridian direction of imaging performed by the optical module 100 and a spatial modulation function in this implementation, and a dashed line indicates a curve of a relationship between a spatial frequency in an arc vector direction of imaging performed by the optical module 100 and a spatial modulation function in this implementation.

It can be learned from FIG. 14 that, when the spatial modulation function is greater than 0.3, imaging definition of the optical module 100 in this implementation is greater than 60 lp/mm, that is, the optical module 100 in this implementation has high definition. The optical module 100 in this implementation has a good optical effect and a small total track length and weight, so that the electronic device 1000 including the optical module 100 can also have a small thickness and a light weight, thereby improving portability and wearing experience of the electronic device 1000.

Refer to FIG. 10. FIG. 10 is a schematic diagram of a structure of an optical module 100 according to a fifth implementation of this application. In this implementation, the lens group A of the optical module 100 includes three lenses. The three lenses are a first lens 11, a second lens 12, and a third lens 13. The first lens 11, the second lens 12, and the third lens 13 are arranged from a direction away from a display 20 to a direction close to the display 20, and the first lens 11, the second lens 12, and the third lens 13 are disposed coaxially. An object side surface of the first lens 11 is a convex surface, and an image side surface is a free curved surface with one inflection. An object side surface of the second lens 12 is a convex surface, and an image side surface of the second lens 12 is a free curved surface with one inflection. An object side surface of the third lens 13 is a free curved surface with two inflections, and an image side surface of the third lens 13 is a plane. Therefore, both the object side surfaces and the image side surfaces of the first lens 11 and the second lens 12 can facilitate diaphragm lamination. To be specific, both the first lens 11 and the second lens 12 are laminating lenses, and the third lens 13 is an optical adjustment lens used for light adjustment. The first lens 11 is a laminating lens farthest from the display 20. That is, the first lens 11 is the first laminating lens of the optical module 100 in the implementation. The second lens 12 is a laminating lens closest to the display 20. That is, the second lens 12 is the second laminating lens of the optical module 100 in the implementation.

Design parameters of the optical module 100 in the fifth implementation of this application are shown in Table 5.

**Table 5 Design parameters of the optical module 100 in the fifth implementation**

| | Curvature radius (mm) | Thickness (mm) | Materials |
|---|---|---|---|
| Optical pupil | Infinity | 11.7 | - |
| First lens S1 | -80.4 | 2.12 | Plastic |
| First lens S2 | -48.15 | 0.38 | - |
| Second lens S1 | -60.14 | 5.04 | Plastic |
| Second lens S2 | -50.30 | 0.55 | - |
| Third lens S1 | Infinity | 5.57 | Plastic |
| Third lens S2 | -12.29 | 1.2 | - |

The optical pupil is a pupil of the user, and a thickness value of a row in which the optical pupil is located indicates a distance between the pupil of the user and the first lens 11 when the user wears the electronic device 1000 in this implementation.

The first lens S1 indicates the image side surface of the first lens 11. A curvature radius value of a row in which the first lens S1 is located indicates a curvature radius of the image side surface of the first lens 11. A thickness value of the row in which the first lens S1 is located is an on-axis distance from the image side surface of the first lens 11 to the object side surface, that is, an on-axis thickness of the first lens 11.

The first lens S2 indicates the object side surface of the first lens 11. A curvature radius value of a row in which the first lens S2 is located indicates a curvature radius of the object side surface of the first lens 11. A thickne ss value of the row in which the first lens S2 is located is an on-axis distance from the object side surface of the first lens 11 to the image side surface of the second lens 12.

The second lens S3 indicates the image side surface of the second lens 12. A curvature radius value of a row in which the second lens S3 is located indicates a curvature radius of the image side surface of the second lens 12. A thickness value of the row in which the second lens S3 is located is an on-axis distance from the image side surface of the second lens 12 to the object side surface, that is, an on-axis thickness of the second lens 12.

The second lens S4 indicates the object side surface of the second lens 12. A curvature radius value of a row in which the second lens S4 is located indicates a curvature radius of the object side surface of the second lens 12. A thickness value of the row in which the second lens S4 is located is an on-axis distance from the object side surface of the second lens 12 to an image side surface of the third lens 13.

The third lens S5 indicates the image side surface of the third lens 13. A curvature radius value of a row in which the third lens S5 is located indicates a curvature radius of the image side surface of the third lens 13. A thickness value of the row in which the third lens S5 is located is an on-axis distance from the image side surface of the third lens 13 to the object side surface, that is, an on-axis thickness of the third lens 13.

The third lens S6 indicates the object side surface of the third lens 13. A curvature radius value of a row in which the third lens S6 is located indicates a curvature radius of the object side surface of the third lens 13. A thickness value of the row in which the third lens S6 is located is an on-axis distance from the object side surface of the third lens 13 to a surface of the display 20.

In this implementation, diaphragms of the optical module 100 include the linear polarizer 31, the first quarter-phase retarder 32, the partially transmissive and partially reflective film 33, the second quarter-phase retarder 34, and the reflective polarizer 35. The linear polarizer 31, the first quarter-phase retarder 32, the partially transmissive and partially reflective film 33, the second quarter-phase retarder 34, and the reflective polarizer 35 are sequentially arranged from a side close to the display 20 to a side away from the display 20. Specifically, in this implementation, the linear polarizer 31 and the first quarter-phase retarder 32 are sequentially superposed on the image side surface of the third lens 13. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11.

Light of a display picture of the display 20 is transmitted to the object side surface of the second lens 12 after successively passing through the third lens 13, the linear polarizer 31, and the first quarter-phase retarder 32, and a part of the light that is irradiated to the object side surface of the second lens 12 passes through the partially transmissive and partially reflective film 33. The light that passes through the partially transmissive and partially reflective film 33 sequentially passes through the second lens 12 and the second quarter-phase retarder 34, and is transmitted to the object side surface of the first lens 11. In this case, a polarization direction of the light transmitted to the object side surface of the first lens 11 is parallel to a reflection axis direction of the reflective polarizer 35. The light transmitted to the object side surface of the first lens 11 is reflected by the reflective polarizer 35, and the reflected light sequentially passes through the second quarter-phase retarder 34 and the second lens 12 and is then transmitted to the partially transmissive and partially reflective film 33. Some light is reflected by the partially transmissive and partially reflective film 33. In this case, a polarization direction of the light that is reflected by the partially transmissive and partially reflective film 33 is parallel to a homology axis direction of the reflective polarizer 35, and the light that is reflected by the partially transmissive and partially reflective film 33 can sequentially pass through the second lens 12, the second quarter-phase retarder 34, the reflective polarizer 35, and the first lens 11 and be illuminated to a human eye, so that the user can observe a picture displayed on the display 20.

In this implementation, the light is reflected once on both a surface of the reflective polarizer 35 and the surface of the partially transmissive and partially reflective film 33, so that the light is folded twice between the reflective polarizer 35 and the partially transmissive and partially reflective film 33. Therefore, the total track length of the optical module 100 is smaller when a same optical effect is achieved. In addition, in this implementation, the linear polarizer 31 and the first quarter-phase retarder 32 are sequentially superposed on the image side surface of the third lens 13. The partially transmissive and partially reflective film 33 is laminated to the object side surface of the second lens 12, the second quarter-phase retarder 34 is laminated to the image side surface of the second lens 12, and the reflective polarizer 35 is laminated to the object side surface of the first lens 11. Therefore, there is no need to add a flat lens specially used for diaphragm lamination. This can avoid increasing a quantity of lenses, and avoid increasing the total track length and the weight of the optical module 100. In addition, both the object side surface that is of the second lens 12 and that is laminated to the partially transmissive and partially reflective film 33 and the object side surface that is of the first lens 11 and that is laminated to the reflective polarizer 35 are curved surfaces, and the object side surface of the second lens 12 or the object side surface of the first lens 11 is not specially designed as a plane to facilitate diaphragm lamination. Therefore, this can achieve an effect of reducing an optical aberration by adding curved surfaces, and reduce a thickness of the lens and shorten the total track length of the optical module 100 while ensuring a required optical effect. In addition, the reflective polarizer 35 and the second quarter-phase retarder 34 are respectively laminated to different laminating lenses. This can avoid a problem that the reflective polarizer 35 or the second quarter-phase retarder 34 laminated on a side of a lens is scrapped when the reflective polarizer 35 or the second quarter-phase retarder 34 is poorly laminated on the other side of the lens, thus reducing production costs.

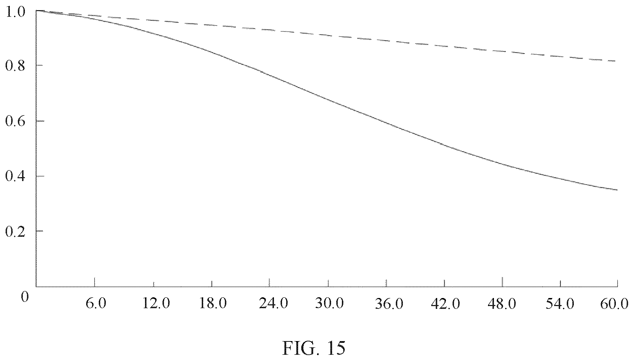

The optical module 100 in this implementation can be obtained based on the design parameters of the foregoing lenses and the lamination locations of the diaphragms. The optical module 100 in this implementation can achieve a good optical effect, and have a short total track length and a light weight. Refer to FIG. 15. FIG. 15 is a representation diagram of optical performance of the optical module 100 according to the fifth implementation. In FIG. 15, a horizontal coordinate is a spatial frequency, and a unit is line pair/mm (LP/mm); and a vertical coordinate is a spatial modulation function, and corresponds to a local contrast value of each current line pair number. Implementation in the figure indicates a curve of a relationship between a spatial frequency in a meridian direction of imaging performed by the optical module 100 and a spatial modulation function in this implementation, and a dashed line indicates a curve of a relationship between a spatial frequency in an arc vector direction of imaging performed by the optical module 100 and a spatial modulation function in this implementation.

It can be learned from FIG. 15 that, when the spatial modulation function is greater than 0.3, imaging definition of the optical module 100 in this implementation is greater than 60 lp/mm, that is, the optical module 100 in this implementation has high definition. The optical module 100 in this implementation has a good optical effect and a small total track length and weight, so that the electronic device 1000 including the optical module 100 can also have a small thickness and a light weight, thereby improving portability and wearing experience of the electronic device 1000.

In this application, the linear polarizer 31, the first quarter-phase retarder 32, the partially transmissive and partially reflective film 33, the second quarter-phase retarder 34, and the reflective polarizer 35 are laminated to the object side surface or the image side surface of the first lens 11, the object side surface or the image side surface of the second lens, or the light-emitting surface of the display 20. Therefore, there is no need to add a flat lens specially used for diaphragm lamination. This can avoid increasing a quantity of lenses, and avoid increasing the total track length and the weight of the optical module 100, thereby enabling the electronic device 1000 containing the optical module 100 of this application to be thinner and lighter, making the electronic device 1000 easier to wear or carry. An object side surface and an image side surface that are of the lens and to at least a part of which a diaphragm is laminated are both curved surfaces, and the object side surface or the image side surface that are of the lens and to which a diaphragm is laminated is not specially designed as a plane to facilitate diaphragm lamination. Therefore, this can achieve an effect of reducing an optical aberration by adding curved surfaces, reduce a thickness of the lens, and further shorten the total track length of the optical module 100 and reduce the weight of the optical module 100.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical module, comprising a plurality of lenses sequentially arranged from an object side to an image side, wherein each lens comprises an object side surface and an image side surface that are disposed opposite to each other, the object side surface faces an object side, and the image side surface faces an image side; the plurality of lenses comprise at least one laminating lens, and both an object side surface and an image side surface of the laminating lens are curved surfaces;
the optical module further comprises a linear polarizer, a first quarter-phase retarder, a partially transmissive and partially reflective film, a second quarter-phase retarder, and a reflective polarizer; and
the linear polarizer, the first quarter-phase retarder, the partially transmissive and partially reflective film, the second quarter-phase retarder, and the reflective polarizer are sequentially arranged from the object side to the image side, and one or more of the linear polarizer, the first quarter-phase retarder, the partially transmissive and partially reflective film, the second quarter-phase retarder, and the reflective polarizer are laminated to the object side surface or the image side surface of the laminating lens.

2. The optical module according to claim 1, wherein the reflective polarizer and the second quarter-phase retarder bend towards the image side, a surface vector height of the reflective polarizer at a location with an effective aperture of h is S1, a surface vector height of the second quarter-phase retarder at a location with an effective aperture of h is S2, and the reflective polarizer and the second quarter-phase retarder meet a relationship: S2-S1≤h/5.

3. The optical module according to claim 1, wherein the object side surface and the image side surface of the laminating lens are spherical surfaces, aspheric surfaces, or free curved surfaces with one inflection.

4. The optical module according to claim 1, wherein there are at least two laminating lenses, the at least two laminating lenses comprise a first laminating lens and a second laminating lens, the first laminating lens is a laminating lens that is farthest from the object side, and the second laminating lens is a laminating lens that is closest to the object side.

5. The optical module according to claim 4, wherein the reflective polarizer is laminated to an image side surface of the first laminating lens, and the partially transmissive and partially reflective film is laminated to an object side surface of the second laminating lens.

6. The optical module according to claim 5, wherein the second quarter-phase retarder is laminated to an object side surface of the first laminating lens or an image side surface of the second laminating lens.

7. The optical module according to claim 4, wherein the reflective polarizer is laminated to the object side surface of the first laminating lens, the partially transmissive and partially reflective film is laminated to the object side surface of the second laminating lens, and the second quarter-phase retarder is laminated to the image side surface of the second laminating lens.

8. The optical module according to any one of claims 4 to 7, wherein the plurality of lenses further comprise at least one optical adjustment lens, an object side surface or an image side surface of the optical adjustment lens is a free curved surface with a plurality of inflections, and the optical adjustment lens is configured to adjust an optical effect of the optical module.

9. The optical module according to claim 1, wherein the reflective polarizer and the second quarter-phase retarder are laminated to different laminating lenses.

10. The optical module according to claim 1, wherein a total track length of the optical module is less than or equal to 30 mm, and mass of the plurality of lenses of the optical module is less than or equal to 25 g.

11. The optical module according to claim 1, wherein the optical module further comprises a display, and the display is located on object sides of the plurality of lenses.

12. An electronic device, comprising a holder and the optical module according to any one of claims 1 to 11, wherein the optical module is fastened to the holder.
